# EUROPEAN PATENT APPLICATION

(11) **EP 1 094 408 A2**
(43) Date of publication of application: **25.04.2001**
(21) Application number: 00309223.6
(22) Date of filing: 19.10.2000
(51) Int. Cl.: G06F 17/30

(54) **Multimedia description scheme having weight information and method for displaying multimedia**

(30) Priority: 19.10.1999 KR 9945202
(71) Applicant: LG ELECTRONICS INC., Seoul (KR)
(72) Inventor: Lee, Jin Soon, Songpa-Ku, Seoul (KR); Song, Jung Min, Gangnam-Ku, Seoul (KR)
(74) Representative: McLeish, Nicholas Alistair Maxwell

(57) **Abstract**

The present invention relates to a multimedia indexing using a weight description scheme, and more particularly, to a weight description scheme and a multimedia indexing method using the same which is capable of increasing the performance of multimedia indexing and browsing by effectively describing weight information on multimedia items. The present invention refers to a weight description scheme and multimedia indexing method using the same, and provides a multimedia description scheme for enabling effective multimedia indexing and browsing by having a weight description scheme consisting of a weight information type, weight information, and its reliability so that each description scheme representing content information of multimedia describes effective weight information.

## Description

### BACKGROUND OF THE INVENTION

### 1. Field of the Invention

The present invention relates to a multimedia indexing using a weight description scheme, and more particularly, to a weight description scheme(hereinafter, "weight DS") and a multimedia indexing method using the same which is capable of increasing the performance of multimedia indexing and browsing by effectively describing weight information on multimedia items.

### 2. Description of the Background Art

For content-based image indexing, various feature descriptors such as a color histogram, partial section colors etc. are used. However, since a main feature descriptor for identifying an image varies according to the image, many techniques for adapting weight information on the feature descriptor corresponding to the feature of the image have been provided.

As a technique for adapting weight information corresponding to the feature of an image in a system for content-based image indexing according to the conventional art, there is a technique for preparing a window for inputting weight information at an user interface so that an user sets weight information on a feature descriptor during indexing, thus making the user input weight information on the feature descriptor using the interface during the indexing.

However, such a method has a problem that it is difficult for a general user to set a weight information on a feature descriptor corresponding to the image.

As another technique for describing weight information for content-based image indexing according to the conventional art, a method for setting weight information on a feature descriptor using user relevance feedback is employed.

In this method, the user firstly performs indexing once in the present state, then marks whether or not an image is similar to which the user searches for in the list according to the result of the indexing, and then provide feedback to a indexing system, thus making the system automatically set or update weight information using the feedback.

This method is advantageous in that the system itself automatically sets weight information on a feature descriptor by using the user's feedback.

The above-described techniques according to the conventional art shows examples of an weighting scheme adapted to a technique for a certain type of multimedia, such as an image.

However, since demands for content-based indexing and browsing of more complicated multimedia are increased recently, there arise a need for a weighting scheme for integrated multimedia indexing and browsing in order to meet these demands.

### SUMMARY OF THE INVENTION

Accordingly, it is an object of the present invention to enable effective multimedia indexing and browsing by providing an integrated multimedia structure and an efficient weight description scheme according to the structure.

The present invention is a weight description scheme and multimedia indexing method using the same, and provides a multimedia description scheme for enabling effective multimedia indexing and browsing by having a weight DS consisting of a weight information type, weight information, and its reliability so that each description scheme representing content information of multimedia describes effective weight information.

In addition, the present invention is a weight description scheme and multimedia indexing method using the same, and provides a multimedia DS for enabling effective indexing and browsing by describing weight information on segments or weight information on segment relations in such a manner that a multimedia content DS includes a segment DS and a segment relational graph DS, said multimedia content DS further including more than one weight DS.

In addition, the present invention is a weight description scheme and multimedia indexing method using the same, and provides a multimedia DS for enabling effective indexing and browsing by describing weight information on segment relations or weight information on segment nodes in such a manner that a multimedia content DS has a segment relational graph DS consisting of more than one segment relation DS and more than one segment node DS, said one segment relation DS including more than one segment relation DS or more than one segment node, said one segment node DS including more than one segment or segment node DS, or more than one segment relation DS, said segment relation DS further including more than one weight DS, and by describing weight information on segments in such a manner that the segment node DS further includes more than one weight DS.

In addition, the present invention provides a multimedia DS for enabling effective multimedia indexing and browsing by describing weight information on objects, weight information on events, or weight information on event/object relational graphs in such a manner that a multimedia content DS includes a content DS consisting of a plurality of event information, a plurality of object information, and a plurality of event/object relational graph DSs, said content DS further including more than one weight DS.

In addition, the present invention provides a multimedia DS for enabling effective multimedia indexing and browsing by describing weight information on relations between events and objects or weight information on event or object nodes in such a manner that a multimedia event/object relational graph DS further includes more than one weight DS, and by describing weight information on events or objects in such a manner that an event or object node DS further includes more than one weight DS.

In addition, the present invention provides a method of displaying multimedia which makes it possible to perform a multimedia summary display using a multimedia DS, weight DS, and segment relational graph DS.

In addition, the present invention provides a method of displaying multimedia which makes it possible to display moving images by indexing the same by character and relation using a multimedia DS and content information, weight DS, and event/object relational graph DS.

Additional advantages, objects and features of the invention will become more apparent from the description which follows.

### BRIEF DESCRIPTION OF THE DRAWINGS

The present invention will become better understood with reference to the accompanying drawings which are given only by way of illustration and thus are not limitative of the present invention, wherein:
Figures 1A and 1B are views illustrating a commonly used weight description scheme(DS), wherein Figure 1A illustrates the weight DS, and Figure 1B describes the same in a XML format;
Figure 2 is a view illustrating a segment DS;
Figures 3A and 3B are views illustrating examples of a description of weight information on segments in the segment DS of Figure 2;
Figures 4A and 4B are views illustrating a multimedia syntactic DS with a weight DS, wherein Figure 4A illustrates the syntactic DS, and Figure 4B describes the same in the XML format;
Figures 5A and 5B are views illustrating a segment relational graph DS with a weight DS, wherein Figure 5A illustrates the segment relational graph DS, and Figure 5B describes the same in the XML format;
Figures 6A and 6B are views illustrating a multimedia semantic DS with a weight DS, wherein Figure 6A illustrates the multimedia semantic DS, and Figure 6B describes the same in the XML format;
Figures 7A and 7B are views illustrating an event/object relational graph DS with a weight DS, wherein Figure 7A illustrates the event/object relational graph DS, and Figure 7B describes the same in the XML format;
Figures 8A and 8B are views illustrating a browsing in a key-frame transition graph format using the segment DS and the segment relational graph DS within the multimedia syntactic DS;
Figure 9 is a view illustrating an example of a character/relation-based moving image browser.

### DETAILED DESCRIPTION OF THE PREFERRED EMBODIMENTS

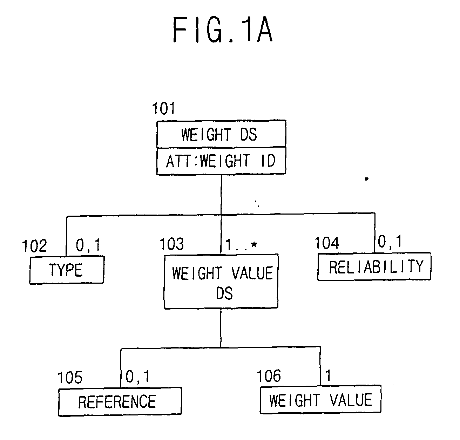

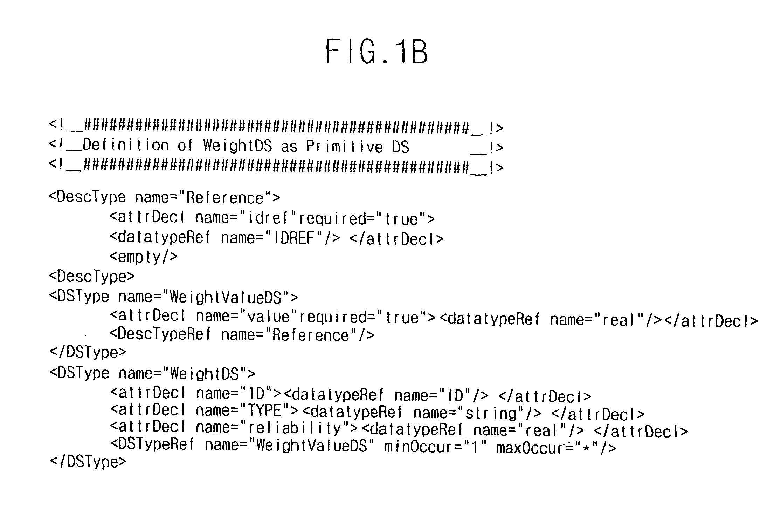

Figures 1A and 1B illustrate a weight DS commonly used in the present invention, wherein Figure 1A illustrates the weight DS, and Figure 1B describes the same in a XML format.

The multimedia weight DS of the present invention in Figure 1 includes a weight type, weight value DS, and reliability so that each DS representing the information of multimedia content can effectively describe weight information.

As seen from Figure 1A, a weight DS 101 includes a weight type 102, weight value DS 103, and reliability 104.

The weight type 102 means the criteria for defining a weight value. The same object can have a plurality of weight inform according to its criteria.

For example, as weight information on feature descriptors used in image indexing are described, two kinds of weight information can be simultaneously described with the respect of the same object, e.g., one is a weight information generated by learning through the user's feedback, and the other is a weight information directly designated by an image generator.

At this time, these two kinds of weight information can be distinguished from each other according to their generation using the weight type 102.

For example, the weight type of the former one(weight information generated by learning through the user's feedback) is "relevance feedback", and the latter one(weight information directly designated by the image generator) is "manual".

In addition, the reliability 104 shows what the weight information assigned to an object according to the weight type 103 is a reliable value. In other words, it shows if the current weight information is reliable.

For example, if the weight type is "relevance feedback", the reliability can be assigned according to how much feedback is provided, or if the weight type is "manual", the reliability of a low value or high value can be assigned respectively to whether the person assigning weight information is a naive user or expert with respect to the corresponding object.

In Figures 1A and 1B, the weight DS 103 includes a plurality of weight value DSs each consisting of a reference 105 and a weight value 106.

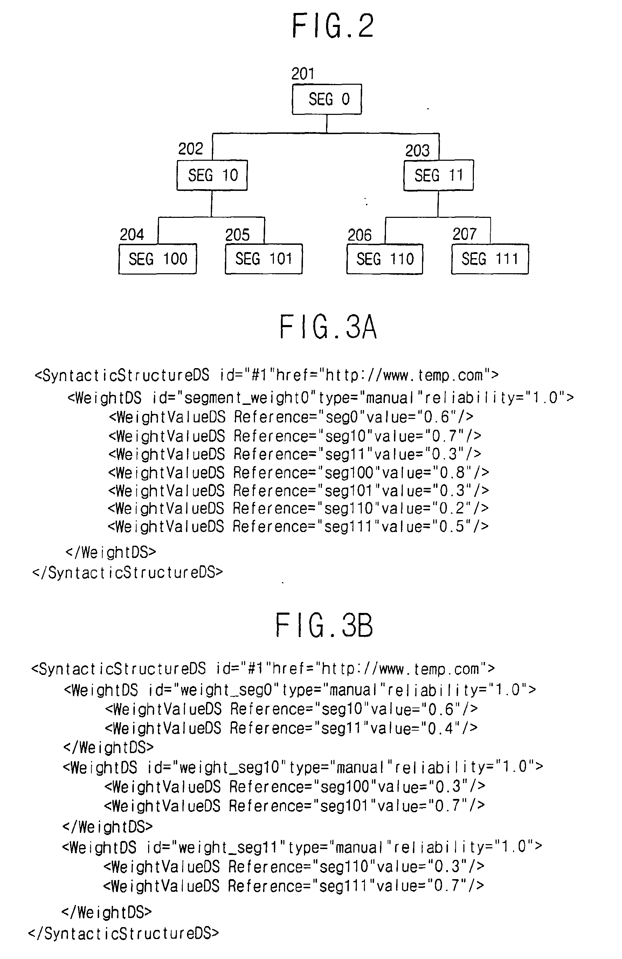

For example, Figure 2 is a view illustrating a segment DS, and Figures 3A and 3B are views illustrating examples of a description of weight information on segments in the segment DS of Figure 2. As shown in Figures 3A and 3B, the weight information on segments in the segment DS are described as a series of weight value DS references and weight values respectively referring to the segments.

In other words, with respect to each of the segment DSs 201 through 201, weight information is described as a series of weight value DS references and weight values referring to each segment DS. Figure 3A describes weight information of all the segments included in a hierarchical structure, and Figure 3B describes the weight information thereof included in the hierarchical structure in unit of segment group by each level.

As an example of the description of the weight information on the segments as a series of weight objects and weight values referring to each segment as shown in Figure 3 in the segment DSs of Figure 2, segment 0(seg0) 201 is described as a weight value DS reference(='seg0') and a weight value(=0.6), and other segments are also described as a weight value DS reference and a weight value.

However, in the case that the order of a plurality of weight value DS references are previously defined, weight information can be described in a n-dimensional vector consisting of only weight values, but no information on weight value DS references.

At this time, since each weight value can be mapped to the corresponding weight value DS reference according to the previously defined order, the weight value DS references can be omitted.

In addition, in the case that the order of the weight value DS references are not previously defined, weight information can be described as a set of pairs of weight value DS references and their weight values.

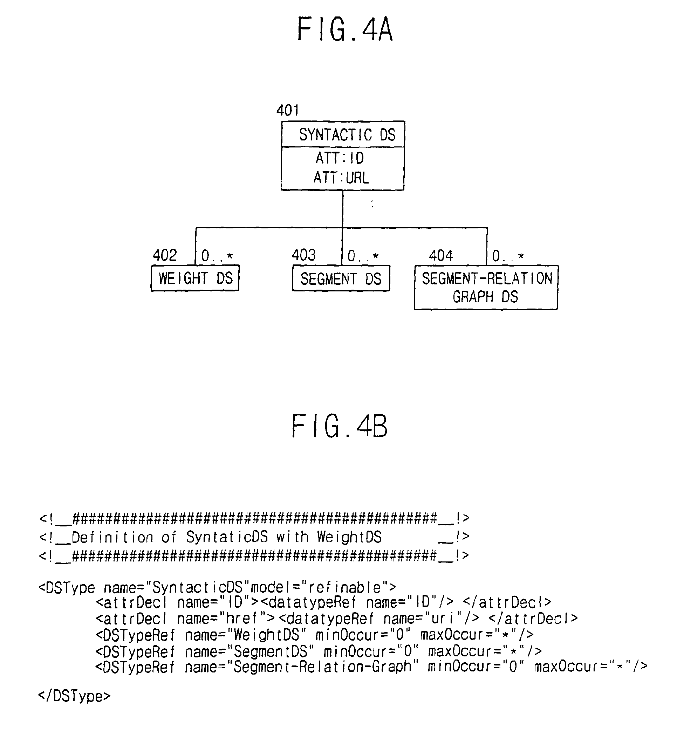

Figures 4A and 4B are views illustrating a multimedia syntactic DS with a weight DS, wherein Figure 4A illustrates the syntactic DS, and Figure 4B describes the same in the XML format.

The multimedia weight DS of the present invention as in Figures 4A and 4B includes a syntactic DS, which is a multimedia content DS associated with a multimedia DS, for multimedia content-based indexing and browsing. When the syntactic DS includes a segment DS representing description schemes of segments and a segment-relation graph DS defining the relation between the segments, the syntactic DS describes weight information on the segments or weight information on the relation between the segments by further including more than one weight DS.

The syntactic DS 401 includes a weight DS 402, a plurality of segment DSs 403, and a segment-relation graph DS 404.

The weight DS 402 describes weight information on the segments or the segment-relation graph.

The segment DS 403 can be constructed hierarchically as shown in Figure 2. At this time, the weight DS can be described as weight information of all segments included in the hierarchical structure as shown in Figure 3A, or can be described as weight information thereof included in the hierarchical structure in unit of segment group by each level as shown in Figure 3B.

In other words, as the segment DS describes a hierarchical segment description scheme by having another child segment DS, one weight DS included in the syntactic DS can describe weight information of all segments described in the hierarchical segment DS, or each of a plurality of weight DSs can describe weight information of all segments in unit of child segment of one segment included in the hierarchical segment DS.

In this example, because there exist three segment groups in the hierarchical structure, the weight information of all segments are described in three weight DSs.

In this way, various forms of weight information can be described using a reference for the target of weighting.

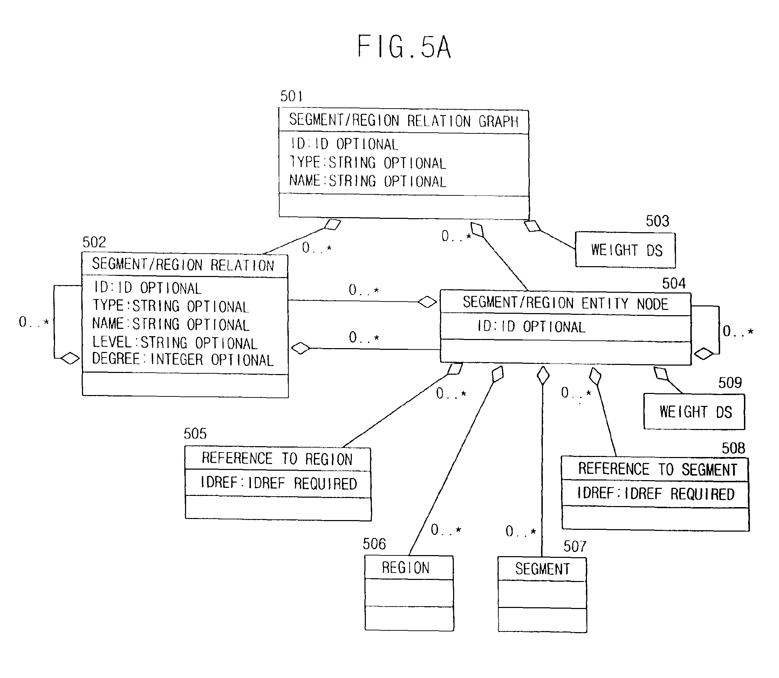

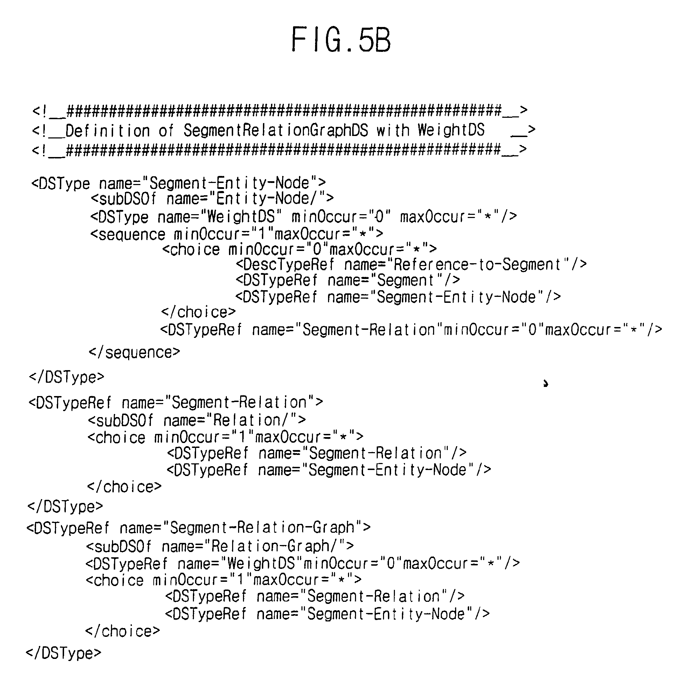

Figures 5A and 5B are views illustrating a segment relational graph DS with a weight DS, wherein Figure 5A illustrates the segment relational graph DS, and Figure 5B describes the same in the XML format.

The multimedia DS of the present invention in Figures 5A and 5B describes the relation between segments by describing weight information on segment relations or weight information on segment nodes in such a manner that a multimedia content DS has a segment relational graph DS consisting of more than one segment relation DS and more than one segment node DS, said one segment relation DS including more than one segment relation DS or more than one segment node, said one segment node DS including more than one segment or segment node DS, or more than one segment relation DS, said segment relation DS further including more than one weight DS, and by describing weight information on segments in such a manner that the segment node DS further includes more than one weight DS.

The segment relational graph DS 501 includes more than one segment relation DS 502 and more than one segment node DS 504, said segment relation DS 502 including more than one segment relation DS or segment node, and said segment node DS 504 including more than one segment, segment node DS, or segment relation DS and having a reference to region 505, corresponding regions 506, segment 507, and reference to segment 508.

Using this DS, a hierarchical segment relational graph can be generated.

Here, the weight DS 503 included in the segment relational graph DS describes weight information on the relations between segments, or weight information on segment nodes, and the weight DS 509 included in the segment node DS 504 describes weight information on segments included in the relational graph.

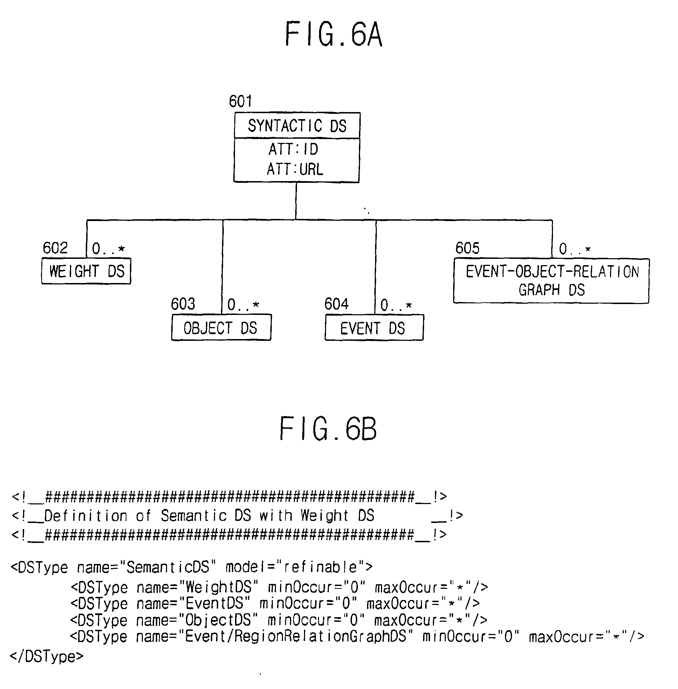

Figures 6A and 6B are views illustrating a multimedia semantic DS with a weight DS, wherein Figure 6A illustrates the multimedia semantic DS, and Figure 6B describes the same in the XML format.

The multimedia DS of the present invention in Figures 6A and 6B describes weight information on objects, weight information on events, or weight information on event/object relational graphs for enabling effective multimedia indexing and browsing in such a manner that a multimedia content DS includes a semantic DS related with multimedia contents, said semantic DS consisting of a plurality of event information, a plurality of object information, and a plurality of event/object relational graph DSs, said semantic DS further including more than one weight DS.

The semantic DS 601 includes a weight DS 6, a plurality of object DSs 603, event DS 604, and event/object relational graph DS 605.

The weight DS 602 describes weight information on objects, weight information on events, or weight information on event/object relational graphs.

The object DS 603, event DS 604, and event/object relational graph 605 can be described hierarchically in the same way as in the segment DS and segment relational graph DS. At this time, also, weight information can be described in unit of parts of each hierarchical structure or in the entire hierarchical structure using a reference for the target of weighting.

In other words, in the multimedia DS of Figures 6A and 6B, as the object(or event) DS describes a hierarchical object(or event) DS by including another child object(or event) DS, one weight DS included in the semantic DS can describe weight information of all objects(or events) described in the hierarchical object(or) DS, or each of a plurality of weight DSs can describe weight information thereof in unit of child object(or event) of one object(or event) included in the hierarchical object(or event) structure.

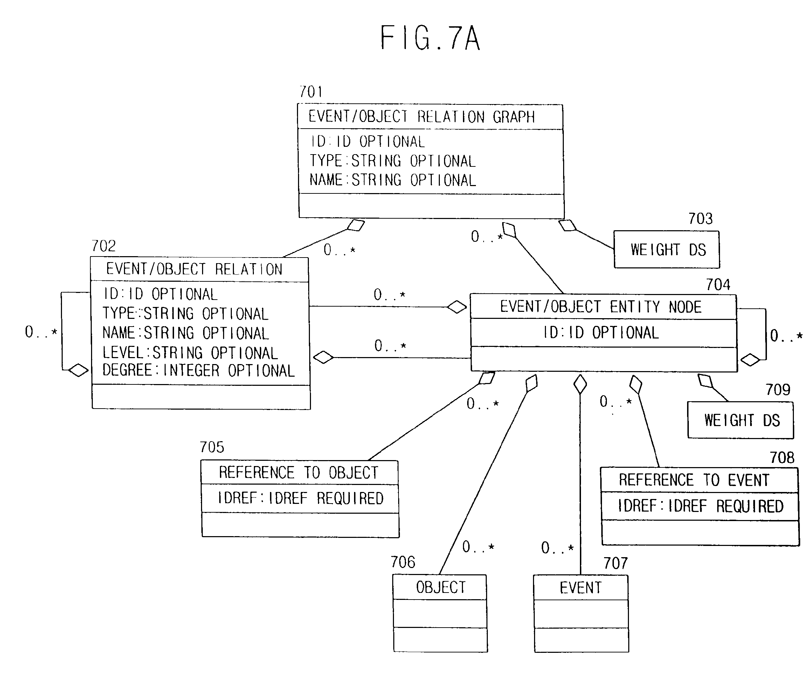

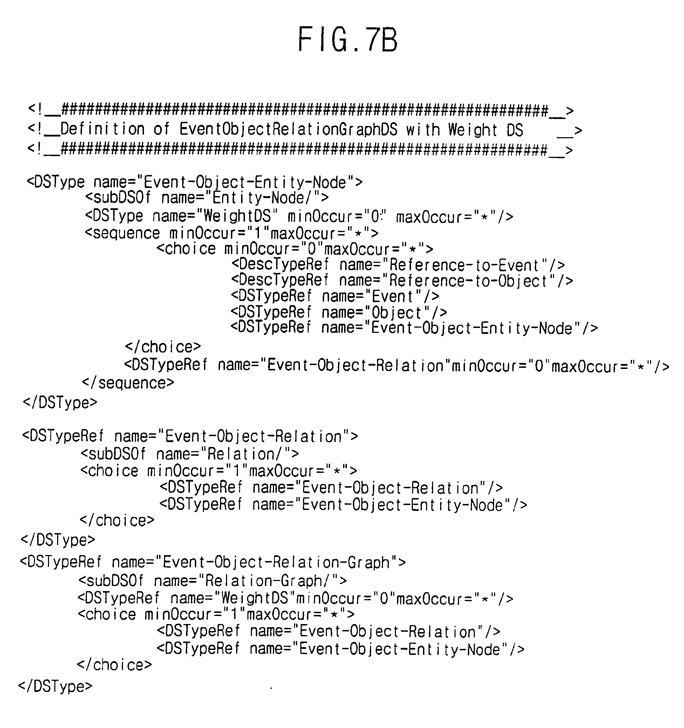

Figures 7A and 7B are views illustrating an event/object relational graph DS with a weight DS, wherein Figure 7A illustrates the event/object relational graph DS, and Figure 7B describes the same in the XML format.

The multimedia DS of the present invention in Figures 7A and B describes weight information on event/object relations or event/object nodes in such a manner that and event/object relational graph DS further includes more than one weight DS, and describes weight information on events or objects in such a manner that an event/object node DS further includes more than one weight DS, in order to describe the relation between the objects and the events, when an event/object relation graph DS includes more than one event/object relation DS and more than one event/object node DS, said event/object relation DS including more than one event/relation graph DS or event/object node, and said event/object node DS including more than one object, event, event/object node DS, or event/object relation DS.

The basic DS in Figures 7A and 7B is similar to the segment relational graph DS described in Figures 5A and 5B.

The event/object relational graph DS 701 includes more than one event/object relation DS 702, weight DS 703, event/object node DS 704, said event/object relation DS 702 including more than one event/object relation DS or event/object node, and said event/object node DS 704 including more than one object, event, event/object node DS, or event/object relation DS. The event/object node DS 704 consists of a reference to object DS 705, object DS 706, event 707, reference to event 708, and weight DS 709.

Here, the weight DS 703 included in the event/object relational graph DS 701 describes weight information on event/object relations or weight information on event/object nodes, and the weight DS 709 included in the event/object node DS 704 describes weight information on events or objects.

Meanwhile, as described above, when the weight information included in the multimedia content DS having a weight DS is a weight information described with respect to a specific part of the hierarchical structure, or a weight information described with respect to one of many items, such as object, event, etc., it is identified by means of a weight value DS reference included in the weight DS whether it is a weight information on a certain part, or a weight information on a certain item.

As the above-described multimedia content DS, a method for browsing and indexing multimedia having weight information, and method for displaying multimedia will now be described.

First, in case of using the multimedia DS and segment relational graph DS including a weight DS, a key-frame transition graph type browsing as an user-dependent key frame-based summarization application will be described.

In displaying a key frame transition graph using the above-described weight DS, multimedia content DS, and segment relational graph DS, the method for displaying a multimedia summary including the multimedia DS of the present invention includes the steps of: extracting key frames as much as an user wants in the order of weight information on segments described in the weight DS in the multimedia content DS; and extracting only relations including the key frames extracted in the segment relational graph DS, and generating a key-frame transition graph using the same.

In addition, in displaying a key-frame transition graph using the above-described weight DS, multimedia content DS, and segment relational graph DS, the method for displaying a multimedia summary including the multimedia DS of the present invention includes the steps of: extracting segment relations in the order of the level of weight information on segment relations described in the weight DS in the segment relational graph DS until the number of key frames that the user wants is reached; and generating a key-frame transition graph using the extracted segment relational graphs.

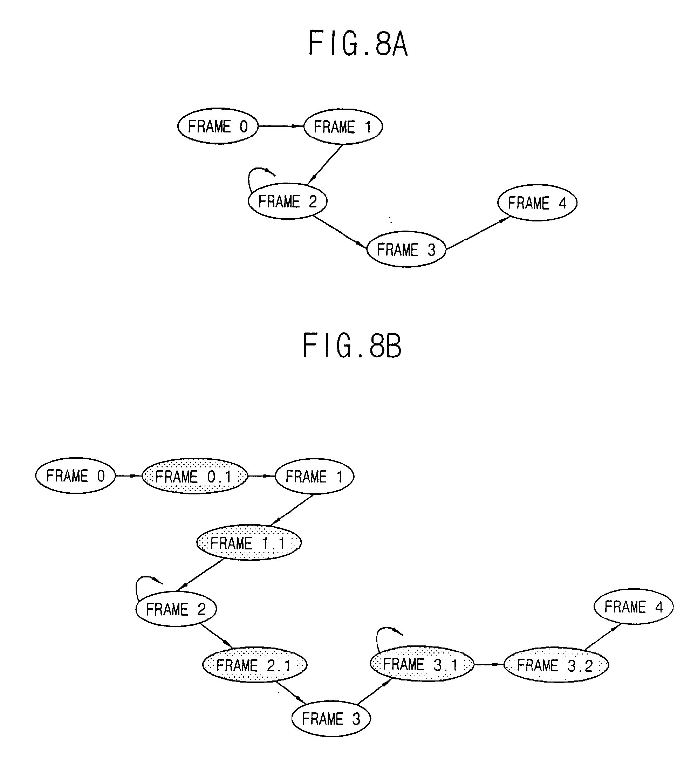

Hereinafter, the method for displaying a multimedia summary will be described with reference to Figures 8A and 8B.

The segment means a predetermined portion of a moving image on the basis of time axis. The moving image consists of continuous frames. Assuming that the moving image consists of 30 frames for one second, a segment having a size of two seconds will consists of continuous 60 frames. Thus, if the time interval of the segment is 0, it means one frame. Therefore, the segment DS may describe one frame.

By this characteristic, a hierarchical key-frame structure can be described using a segment DS in the multimedia content DS, and a key-frame relational graph can be described using a segment relational graph structure. In particular, a key-frame relation means the relation of temporal order between key frames, a temporal transition graph can be described.

In other words, using the segment DS and segment relational graph DS in the multimedia content DS, a key-frame transition graph type browsing as shown in Figures 8A and 8B are made possible.

At this time, the user may want to adjust the number of nodes of the key-frame transition graph, because the complicity of the key-frame transition graph disturbs in understanding contents.

That is, by means of the same DS, a transition graph using five key frames(frame 0 ∼ frame 4) as in Figure 8A, or a transition graph using 10 frames(frame 0, frame 0.1, frame 1, frame 1.1, frame 2, frame 2.1, frame 3, frame 3.1, frame 3.2, frame 4) as in Figure 8B can be requested.

When such a request is occurred, a key-frame transition graph can be generated by means of key frames as much as the user wants in the order of the level of weight information, by using the weight DS included in the DS.

In the same way, in the case that the user designates the approximate number of key frames, a key frame transition graph can be generated by extracting relations as much as the number of key frames that the user wants using the weight DS included in the segment relational graph DS in the order of the level of weight information, and using the same.

At this time, since the extraction is done in the order of the level of not weight information on key frames, but weight information on key-frame transition, it is advantageous in that a key frame transition graph more effectively reflecting the overall flow of contents is provided. However, it is disadvantageous in that the number of frames that the user wants cannot be accurately reflected.

Next, a character/relation-based moving image browser using the multimedia semantic DS and event/object relational graph DS including a weight DS will be described.

In indexing moving images based on character/relation using a multimedia content DS such as the above-mentioned weight DS and event/object relational graph and displaying the same, the method for displaying moving images based on character/relation is characterized in that: characters are arranged in the order of weight information on objects described by a weight DS included in the above multimedia content DS, relational transition between two characters are arranged in the order of weight information on the relations between objects described by a weight DS included in the above event/object relational graph DS, and key frames of event segments satisfying the relation between the selected two characters are arranged in the order of weight information on segments described by a weight DS included in the DS.

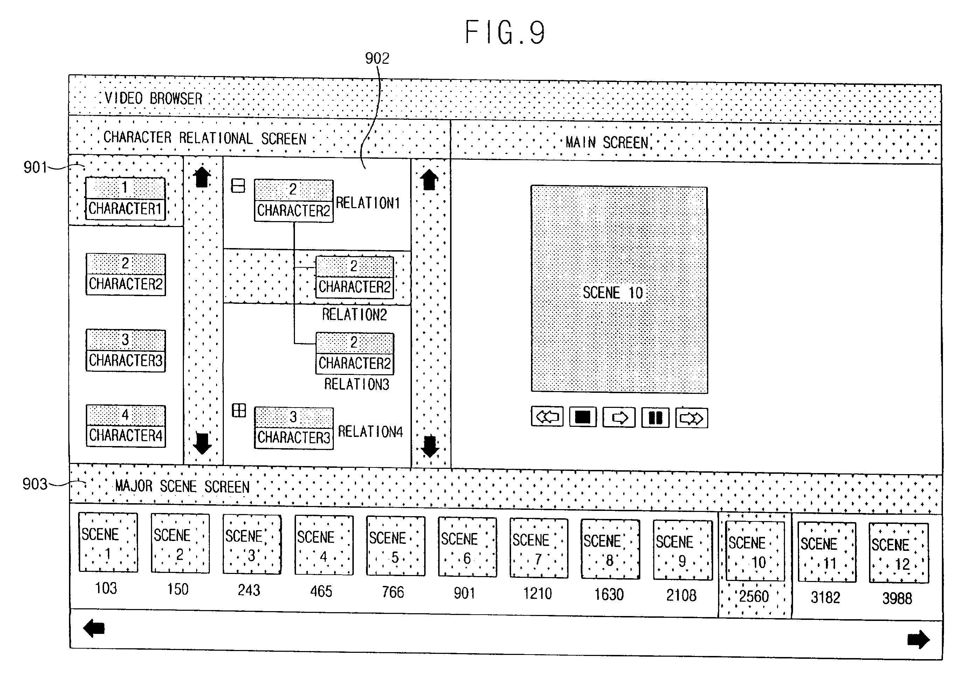

The method for displaying moving images based on character/relation will now be described with reference to Figures 9A and 9B.

Generally, since the contents of a moving image is displayed based on the relation between main characters, a method for indexing and browsing moving images based on the relation between characters can be usefully utilized.

Such a utilization is made possible using objects(characters) and a event/objects relational graph DS included in the multimedia content DS.

A basic user interface of such a browser is illustrated in Figure 9.

In Figure 9, a character screen 901 arranges characters appearing in the contents of moving images, and a character/relation screen 902 arranges characters related with the characters selected in the character screen 901 and at the same time describes changes in the relation between the selected two characters.

A main scene screen 903 arranges key frames representing an event segment satisfying the specific relation between these characters.

At this time, the order of arranging the characters arranged in the character screen 901 is set by means of the weight DS included in the content DS.

That is, the characters can be arranged in the order of priority using weight information on the objects.

In addition, the order of displaying the relations between the characters described in the character/relation screen 902 can be determined using the weight DS included in the event/object relational graph DS.

Finally, the order of key frames satisfying the selected relation is determined using the weight DS included in the content DS describing weight information on segments.

As described above, in a structure for multimedia content-based indexing and browsing, the present invention enables higher-performance indexing and browsing by describing effective weight information on each content DS. In addition, the present invention provides a weight DS corresponding to a complex multimedia content DS in various ways, for thereby preparing a multimedia standard for multimedia indexing and browsing using weight information.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalence of such meets and bounds are therefore intended to be embraced by the appended claims.

## Claims

1. A multimedia description scheme, characterized in that: each description scheme representing content information of multimedia comprises a weight information type meaning the criteria for defining a weight value, weight information according to the criteria defined by the weight information type, and reliability which means how weight information assigned to a target is reliable according to the weight information type.

2. The multimedia description scheme of claim 1, wherein the same target can have a plurality of weight information according to its criteria using the weight information type meaning the criteria for defining a weight value.

3. The multimedia description scheme of claim 1, wherein the weight information is described in a n-dimensional vector, if the order of weighting targets is previously defined.

4. The multimedia description scheme of claim 1, wherein the weight information is described as a set of pairs of a reference for weighting target and a weight value, if the order of weighting values is not previously defined.

5. A multimedia description scheme for enabling effective indexing and browsing, characterized in that: weight information on segments or weight information on segment relations is described in such a manner that a multimedia content description scheme includes a segment description scheme and a segment relational graph description scheme, said multimedia content description scheme further including more than one weight description scheme.

6. The multimedia description scheme of claim 5, wherein, when the segment description scheme describe a hierarchical segment structure including another child segment description scheme, one weight description scheme included in the multimedia description scheme describes weight information on all segments described in the hierarchical segment structure, or a plurality of weight description schemes each describe weight information in unit of child segments of one segment included in the hierarchical segment structure.

7. The multimedia description scheme of claim 5, wherein when a multimedia content description scheme has a segment relational graph description scheme consisting of more than one segment relation description scheme and more than one segment node description scheme, said one segment relation description scheme including more than one segment relation description scheme or more than one segment node, said one segment node description scheme including more than one segment or segment node description scheme, or more than one segment relation description scheme, the segment relational graph description scheme describes weight information on segment relations or weight information on segment nodes by further including more than one weight description scheme, and the segment node description scheme describes weight information on segments by further including more than one weight description scheme.

8. A multimedia description scheme for enabling effective multimedia indexing and browsing, characterized in that: weight information on objects, weight information on events, or weight information on event/object relational graphs are described in such a manner that a multimedia content description scheme includes a content description scheme consisting of a plurality of event information, a plurality of object information, and a plurality of event/object relational graph description schemes, said content description scheme further including more than one weight description scheme.

9. The multimedia description scheme of claim 8, wherein, when the event or object description scheme describes a hierarchical object or event description scheme by including another child object event description scheme, one weight description scheme included in the content description scheme describes weight information on all objects or events described in the hierarchical object or event description scheme.

10. The multimedia description scheme of claim 8, wherein, when the event or object description scheme describes a hierarchical object or event description scheme by including another child object event description scheme, a plurality of weight description schemes included in the content description scheme each describe weight information in unit of child object(event) of one object(event) included in the hierarchical object or event description scheme.

11. A multimedia description scheme for enabling effective multimedia indexing and browsing, characterized in that: weight information on relations between events and objects or weight information on event or object nodes is described in such a manner that a multimedia event/object relational graph description scheme further includes more than one weight description scheme, and weight information on events or objects is described in such a manner that an event or object node description scheme further includes more than one weight description scheme.

12. In displaying a key frame transition graph using the above-described weight description scheme, multimedia content description scheme, and segment relational graph description scheme, a method for displaying a multimedia summary including the multimedia description scheme, comprising the steps of:
extracting key frames as much as an user wants in the order of weight information on segments described in the weight description scheme in the multimedia content description scheme; and
extracting only relations including the key frames extracted in the segment relational graph description scheme, and generating a key-frame transition graph using the same.

13. In displaying a key-frame transition graph using the above-described weight description scheme, multimedia content description scheme, and segment relational graph description scheme, a method for displaying a multimedia summary including the multimedia description scheme of the present invention, comprising the steps of:
extracting segment relations in the order of the level of weight information on segment relations described in the weight description scheme in the segment relational graph description scheme until the number of key frames that the user wants is reached; and
generating a key-frame transition graph using the extracted segment relational graphs.

14. In indexing moving images based on character/relation using a multimedia content description scheme such as the above-mentioned weight description scheme and event/object relational graph and displaying the same, a method for displaying moving images based on character/relation is characterized in that: characters are arranged in the order of weight information on objects described by a weight description scheme included in the above multimedia content description scheme, relational transition between two characters are arranged in the order of weight information on the relations between objects described by a weight description scheme included in the above event/object relational graph description scheme, and key frames of event segments satisfying the relation between the selected two characters are arranged in the order of weight information on segments described by a weight description scheme included in the description scheme.
